# EUROPEAN PATENT APPLICATION

(11) **EP 4 678 953 A1**
(43) Date of publication of application: **14.01.2026**
(21) Application number: 24770474.5
(22) Date of filing: 22.02.2024
(51) Int. Cl.: F16J 15/3204

(54) **SEALING DEVICE**

(30) Priority: 10.03.2023 JP 2023037277
(71) Applicant: NOK Corporation, Minato-ku Tokyo 105-8585 (JP)
(72) Inventor: KAMIYA, Yusuke, Fukushima-shi, Fukushima 960-1193 (JP); OHASHI, Shota, Fukushima-shi, Fukushima 960-1193 (JP); YOSHIMURA, Kenichi, Fukushima-shi, Fukushima 960-1193 (JP)
(74) Representative: Global IP Europe Patentanwaltskanzlei
(86) International application number: PCT/JP2024/006531
(87) International publication number: WO 2024/190361

(57) **Abstract**

A sealing device (100) is a sealing device (100) that is disposed in a gap (320) between an outer peripheral surface (210) of a rotation shaft (200) and an inner peripheral surface (310) of a shaft hole (301) in a housing (300) having the shaft hole (301) into which the rotation shaft (200) is inserted to seal the gap (320), the sealing device (100) including: a first lip portion (23); a second lip portion disposed on an inner side (330) of the first lip portion (23) in the housing (300); and a metal ring (70) holding the second lip portion, wherein the second lip portion is a conductive lip (50) constituted by a conductive material, the metal ring (70) includes an abutting portion (70a) abutting on the housing (300), and an inward extending portion (70b) extending radially inward from the abutting portion (70a) and holding the conductive lip (50).

## Description

### TECHNICAL FIELD

The present invention relates to a sealing device.

### BACKGROUND ART

A sealing device disposed in a gap between an outer peripheral surface of a rotation shaft and an inner peripheral surface of a shaft hole in a housing having the shaft hole into which the rotation shaft is inserted is known.

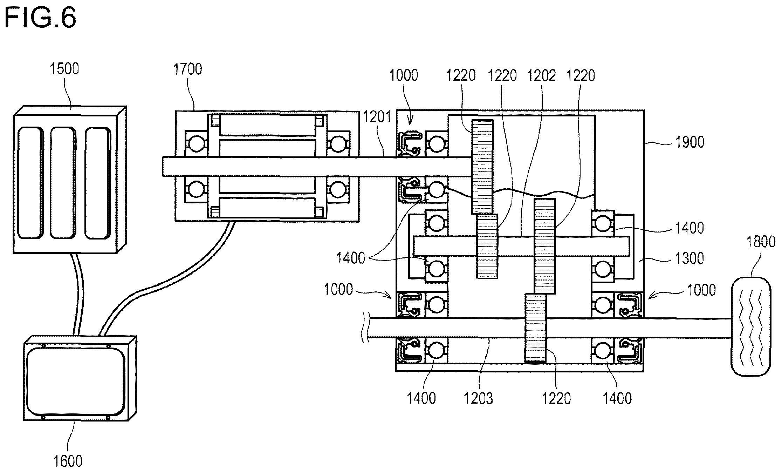

As illustrated in Fig. 6, the sealing device (sealing device 1000) can be used by being incorporated in a speed reducer 1900 of an electric vehicle (EV) or a fuel cell vehicle (FCV) as an example.

In the example of Fig. 6, the speed reducer 1900 includes a housing 1300, a first rotation shaft 1201, a second rotation shaft 1202, and a third rotation shaft 1203 provided in the housing 1300, and a plurality of bearings 1400 provided in the housing 1300 and respectively bearing the first rotation shaft 1201, the second rotation shaft 1202, and the third rotation shaft 1203.

The electric power of a battery 1500 is supplied to an electric motor 1700 via an inverter 1600, and the electric motor 1700 is driven, so that the first rotation shaft 1201 which is an output shaft of the electric motor 1700 rotates.

The first rotation shaft 1201, the second rotation shaft 1202, and the third rotation shaft 1203 are connected in this order via gears 1220. The rotation of the first rotation shaft 1201 is transmitted from the first rotation shaft 1201 to the second rotation shaft 1202, and further transmitted from the second rotation shaft 1202 to the third rotation shaft 1203. That is, the rotation of the first rotation shaft 1201 is transmitted to the third rotation shaft 1203 at a desired reduction ratio.

The third rotation shaft 1203 is provided with wheels 1800.

However, in a mechanism including the rotation shafts (the first rotation shaft 1201, the second rotation shaft 1202, and the third rotation shaft 1203) rotationally driven by the electric motor 1700 as in the example of Fig. 6, an induction current generated in the electric motor 1700 causes electromagnetic wave noise of an AM radio to be generated from the rotation shaft, or electrolytic corrosion is generated in the bearing 1400 due to generation of sparks in the bearing 1400.

In order to solve these problems, it is desirable to ensure energization between the rotation shaft and the housing 1300, that is, to ground the rotation shaft to the housing 1300.

As an existing technique for this purpose, there is an earth brush, but there are problems that it is necessary to ensure a dedicated space, brush abrasion powder is generated, and the like.

As a technology for solving the above-described problem, there is a sealing device including a conductive lip.

The sealing device of Patent Document 1 (seal ring of Patent Document 1) includes a seal body having a lip portion (seal lip of Patent Document 1) and a conductive lip (pre-seal of Patent Document 1) provided on an atmosphere-side surface of the seal body.

### CITATION LIST

### PATENT DOCUMENT

Patent Document 1: JP 2014-142065 A

### SUMMARY OF THE INVENTION

### PROBLEMS TO BE SOLVED BY THE INVENTION

However, according to the study of the inventors of the present application, there is still room for improvement in the technique of Patent Document 1 from the viewpoint of more reliably ensuring electrical conduction by the conductive lip.

The present invention has been made in view of the above problems, and it is an object of the present invention to provide a sealing device capable of more reliably ensuring electrical conduction by a conductive lip.

### MEANS FOR SOLVING THE PROBLEM

According to the present invention, there is provided a sealing device that is disposed in a gap between an outer peripheral surface of a rotation shaft and an inner peripheral surface of a shaft hole in a housing having the shaft hole into which the rotation shaft is inserted to seal the gap, the sealing device including:
a first lip portion;
a second lip portion disposed on an inner side of the first lip portion in the housing; and
a metal ring holding the second lip portion, wherein
the second lip portion is a conductive lip constituted by a conductive material, and
the metal ring includes an abutting portion abutting on the housing, and an inward extending portion extending radially inward from the abutting portion and holding the conductive lip.

### EFFECT OF THE INVENTION

According to the present invention, it is possible to more reliably ensure electrical conduction by the conductive lip.

### BRIEF DESCRIPTION OF THE DRAWINGS

[Fig. 1]Fig. 1 is a view illustrating a sealing device according to a first embodiment, and illustrates a cut end surface along an axial center of a rotation shaft.
[Fig. 2]Fig. 2 is a partially enlarged view of Fig. 1.
[Fig. 3]Fig. 3A is a cut end view illustrating a first unit of the sealing device according to the first embodiment and illustrates a state before the rotation shaft is inserted into the first unit, and Fig. 3B is a cut end view illustrating a second unit of the sealing device according to the first embodiment and illustrates a state before the rotation shaft is inserted into the second unit.
[Fig. 4]Fig. 4 is an exploded cut end view for describing the manufacturing process of the second unit of the sealing device according to the first embodiment.
[Fig. 5]Fig. 5 is a view illustrating a sealing device according to a second embodiment, and illustrates a cut end surface along an axial center of a rotation shaft.
[Fig. 6]Fig. 6 is a schematic view for describing problems of a general sealing device.

### DESCRIPTION OF EMBODIMENTS

Hereinafter, embodiments of the present invention will be described with reference to the drawings. Note that, in all the drawings, the similar components are denoted by the same reference numerals, and the description thereof will not be repeated.

### [First Embodiment]

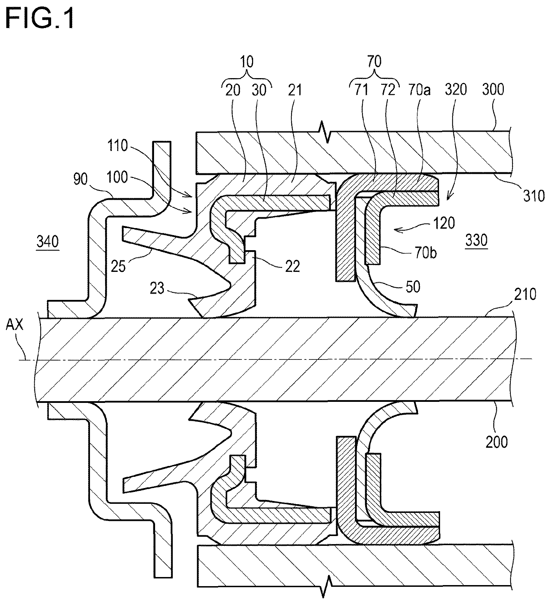

First, a first embodiment will be described with reference to Figs. 1 to 4.

A sealing device 100 is disposed in a gap 320 so that a central axis AX of the sealing device 100 coincides with an axial center of a rotation shaft 200.

In the following description, a direction orthogonal to the central axis AX is referred to as a radial direction.

In the radial direction, a direction away from the central axis AX is referred to as a radial outside, and a direction approaching the central axis AX is referred to as a radial inside.

Further, a direction around the central axis AX is referred to as a circumferential direction.

In addition, a direction along the central axis AX may be simply referred to as an axial direction.

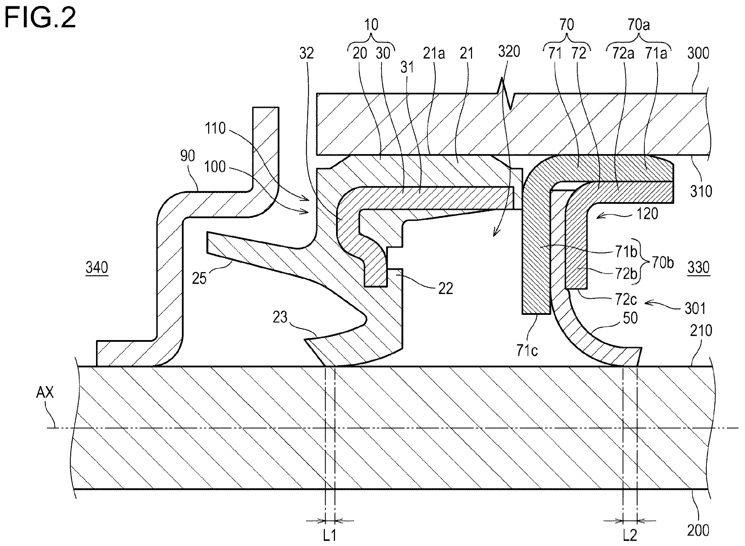

Further, in the direction along the central axis AX, one side (right side in Figs. 1 and 2) is an inner side (inside) of the mechanism in which the sealing device 100 is provided, and the direction is referred to as an inner side 330. In the direction along the central axis AX, the other side (left side in Figs. 1 and 2) is an outer side (atmosphere side) of the mechanism in which the sealing device 100 is provided, and the direction is referred to as an outer side 340.

As illustrated in Fig. 1 or 2, the sealing device 100 according to the present embodiment is disposed in the gap 320 between an outer peripheral surface 210 of the rotation shaft 200 and an inner peripheral surface 310 of a shaft hole 301 in a housing 300 having a shaft hole 301 into which the rotation shaft 200 is inserted to seal the gap 320.

The sealing device 100 includes a first lip portion 23, a second lip portion disposed on the inner side 330 of the first lip portion 23 in the housing 300, and a metal ring 70 holding the second lip portion.

The second lip portion is a conductive lip 50 constituted by a conductive material.

The metal ring 70 has an abutting portion 70a abutting on the housing 300 and an inward extending portion 70b extending radially inward from the abutting portion 70a and holding the conductive lip 50.

In the sealing device 100 according to the present embodiment, when the sealing device 100 is assembled to the housing 300 and the gap 320 of the shaft hole 301 of the housing 300 is sealed, the metal ring 70 and the conductive lip 50 each form a portion of a conductive path between the housing 300 and the rotation shaft 200. Thus, it is possible to ensure electrical conduction between the rotation shaft 200 and the housing 300 through the metal ring 70 and the conductive lip 50, that is, to ground the rotation shaft to the housing 300. Therefore, it is possible to suppress generation of electromagnetic wave noise of the AM radio from the rotation shaft and generation of electrolytic corrosion of the bearing.

Since the sealing device 100 can be replaced with an existing sealing device, a space dedicated to a ground brush is unnecessary, and abrasion powder of the brush can be prevented from occurring.

In addition, unlike the technique of ensuring the electrical conduction between the rotation shaft 200 and the housing 300 by the conductive lip alone, the electrical conduction is ensured by the conductive lip 50 and the metal ring 70 which is a metal member, and thus the electrical resistance of the conductive path from the rotation shaft 200 to the housing 300 can be reduced.

In the housing 300, the conductive lip 50 is disposed on the inner side 330 of the contact portion between the first lip portion 23 and the rotation shaft 200, that is, the conductive lip 50 is disposed on the inner side 330 with respect to a portion sealed by the first lip portion 23, whereby the influence of foreign matter on the conductive lip 50 can be suppressed. This makes it possible to ensure electrical conduction by the conductive lip 50 more reliably.

In the present embodiment, the first lip portion 23 is a dust lip.

Since the sealing device 100 includes both the first lip portion 23 as a dust lip and the conductive lip 50, it is possible to achieve both dust sealing performance and conductivity while reducing the number of components and installation space.

By disposing the conductive lip 50 on the inner side 330 of the contact portion between the first lip portion 23, which is a dust lip, and the rotation shaft 200, it is possible to impart conductivity without impairing the dust sealing performance.

The sealing device 100 suppresses intrusion of foreign matter from the outer side 340 to the inner side 330 by the first lip portion 23 and the conductive lip 50.

In particular, it is possible to ensure electrical conduction with a small number of components even in a water-soaked environment that has been difficult to apply with an earth brush.

Note that another oil seal (having an oil lip) may be disposed on the inner side 330 of the conductive lip 50.

Hereinafter, the present embodiment will be described in more detail.

The mechanism in which the sealing device 100 is disposed (mounted) is, for example, a speed reducer of an electric vehicle (EV) or a fuel cell vehicle (FCV), and includes a housing 300 constituted by a metal material. The housing 300 has a shaft hole 301 into which the rotation shaft 200 is inserted.

Note that, in general, of the sealing device 100 and the rotation shaft 200, the sealing device 100 is inserted and fixed into the shaft hole 301 first, and then the rotation shaft 200 is inserted.

In the present embodiment, the sealing device 100 includes a first unit 110 including the first lip portion 23 and a second unit 120 including the conductive lip 50.

The first unit 110 includes a seal body 10.

The seal body 10 includes a core metal 30 constituted by a metal material and a seal body constituent member 20 constituted by an elastic body and in which the core metal 30 is integrated. The seal body constituent member 20 includes a first lip portion 23.

The seal body constituent member 20 is formed in an annular shape centered on the central axis AX.

The seal body constituent member 20 includes, for example, a body abutting portion 21 formed in a cylindrical shape concentric with the central axis AX, a body inward extending portion 22 extending in an inner flange shape radially inward from one end (end on the outer side 340) of the body abutting portion 21 in the axial direction.

The first lip portion 23 obliquely extends from the radially inner end of the body inward extending portion 22 radially inward and toward the outer side 340 (the left side in Fig. 2).

The seal body constituent member 20 includes an outward extending portion 25 extending from a surface of the body inward extending portion 22 on the outer side 340 toward the outer side 340. The outward extending portion 25 is disposed radially outside the first lip portion 23.

Here, a slinger 90 is fixed to the rotation shaft 200. The slinger 90 rotates with the rotation of the rotation shaft 200. The slinger 90 is formed in, for example, a stepped flange shape that is shifted toward the inner side 330 in a stepwise manner toward the radial outside.

The outward extending portion 25 extends toward an inside of a gap between the slinger 90 and the outer peripheral surface 210 of the rotation shaft 200.

The seal body constituent member 20 is formed in a three-dimensional shape corresponding to a movement locus of a cut end surface shape of the seal body constituent member 20 illustrated in Fig. 2 when the cut end surface shape is rotated once around the central axis AX.

A portion of an outer peripheral surface of the body abutting portion 21 is a contact surface 21a that is circumferentially pressed against the inner peripheral surface 310 of the shaft hole 301.

The first lip portion 23 is circumferentially brought into pressure contact with the outer peripheral surface 210 of the rotation shaft 200, and slides with respect to the outer peripheral surface 210 when the rotation shaft 200 rotates.

The sealing performance is ensured by a pressure contact portion between the contact surface 21a and the inner peripheral surface 310 and a pressure contact portion between the first lip portion 23 and the outer peripheral surface 210.

Since the first lip portion 23 is not required to have conductivity, a general sealing rubber material can be used as the material of the seal body constituent member 20.

Examples of such an elastic material include synthetic rubbers such as nitrile rubber (NBR), hydrogenated nitrile rubber (H-NBR), acrylic rubber (ACM), and fluororubber (FKM).

The entire seal body constituent member 20 is integrally molded.

More specifically, the seal body constituent member 20 is integrally molded with the core metal 30.

For example, the core metal 30 is disposed in a molding die that is not shown in the drawings, an uncrosslinked rubber material is injected, and then the rubber material is crosslinked by heating and pressurizing an inside of the cavity of the molding die, whereby the seal body 10 in which the seal body constituent member 20 and the core metal 30 are integrally molded can be obtained.

Examples of the metal material constituting the core metal 30 include stainless steel (SUS) and cold rolled steel (SPCC).

The core metal 30 can be formed by press working or forging.

The core metal 30 includes, for example, a cylindrical portion 31 formed in a cylindrical shape concentric with the central axis AX, and a core metal inward extending portion 32 extending in an inner flange shape radially inward from one end (end on the outer side 340) of the cylindrical portion 31 in the axial direction.

The cylindrical portion 31 of the core metal 30 is embedded in the body abutting portion 21. However, a portion of the cylindrical portion 31 may be exposed from the body abutting portion 21 (from the seal body constituent member 20).

The core metal inward extending portion 32 is embedded in the body inward extending portion 22. The core metal inward extending portion 32 may be formed in a flat plate shape, or may be partially bent along the shape of the seal body constituent member 20 as illustrated in Fig. 2.

The core metal 30 is formed in a three-dimensional shape corresponding to a movement locus of a cut end surface shape of the core metal 30 illustrated in Fig. 2 when the cut end surface shape is rotated once around the central axis AX.

The first unit 110 is constituted by the above-described seal body 10.

On the other hand, the second unit 120 is constituted by the metal ring 70 and the conductive lip 50.

The metal ring 70 is configured to include a first metal ring 71 and a second metal ring 72.

The first metal ring 71 includes a first cylindrical portion 71a and a first inward extending portion 71b extending radially inward from the first cylindrical portion 71a.

The second metal ring 72 includes a second cylindrical portion 72a disposed along an inner peripheral surface of the first cylindrical portion 71a, and a second inward extending portion 72b extending radially inward from the second cylindrical portion 72a and disposed along the first inward extending portion 71b.

The first cylindrical portion 71a and the second cylindrical portion 72a constitute an abutting portion 70a.

The first inward extending portion 71b and the second inward extending portion 72b constitute an inward extending portion 70b.

The conductive lip 50 is held by the inward extending portion 70b of the metal ring 70 by being sandwiched between the first inward extending portion 71b and the second inward extending portion 72b.

As described above, since the conductive lip 50 is held by being sandwiched between the two metal rings (the first metal ring 71 and the second metal ring 72), a structure in which the conductive lip 50 is held more stably can be realized.

The second inward extending portion 72b is disposed on the inner side 330 of the first inward extending portion 71b in the housing 300.

An inner peripheral end of the second inward extending portion 72b (an inner peripheral end 72c of the second metal ring 72) is located radially outside an inner peripheral end of the first inward extending portion 71b (an inner peripheral end 71c of the first metal ring 71). Thus, in the conductive lip 50, a portion extending radially inward more than the inward extending portion 70b is bent toward the inner side 330 in the housing 300.

The first cylindrical portion 71a is formed in, for example, a cylindrical shape concentric with the central axis AX.

The first inward extending portion 71b extends radially inward in an inner flange shape from one end (end on the outer side 340) of the first cylindrical portion 71a in the axial direction.

The first cylindrical portion 71a is formed in, for example, a flat plate shape orthogonal to the central axis AX and a donut shape.

The first metal ring 71 is formed in a three-dimensional shape corresponding to a movement locus of a cut end surface shape of the first metal ring 71 illustrated in Fig. 2 when the cut end surface shape is rotated once around the central axis AX.

An outer peripheral surface of the first cylindrical portion 71a is circumferentially pressed against the inner peripheral surface 310 of the shaft hole 301.

The second cylindrical portion 72a is formed in, for example, a cylindrical shape concentric with the central axis AX.

The second inward extending portion 72b extends radially inward in an inner flange shape from one end (end on the outer side 340) of the second cylindrical portion 72a in the axial direction.

The second cylindrical portion 72a is formed in, for example, a flat plate shape orthogonal to the central axis AX and a donut shape.

The second metal ring 72 is formed in a three-dimensional shape corresponding to a movement locus of a cut end surface shape of the second metal ring 72 illustrated in Fig. 2 when the cut end surface shape is rotated once around the central axis AX.

The inner peripheral surface of the first cylindrical portion 71a is circumferentially brought into pressure contact with an outer peripheral surface of the second cylindrical portion 72a.

Examples of the material of the first metal ring 71 and the second metal ring 72 include stainless steel (SUS) and cold rolled steel (SPCC).

The first metal ring 71 and the second metal ring 72 can each be formed by press working or forging.

The conductive lip 50 is formed in a donut shape centered on the central axis AX.

The conductive lip 50 is formed in a three-dimensional shape corresponding to a movement locus of a cut end surface shape of the conductive lip 50 illustrated in Fig. 2 when the cut end surface shape is rotated once around the central axis AX.

In the case of the present embodiment, a distal end (radially inner end) of the conductive lip 50 is in contact with the outer peripheral surface 210 of the rotation shaft 200 in a circumferential manner, and electrical conduction between the rotation shaft 200 and the conductive lip 50 can be ensured.

Note that the distal end of the conductive lip 50 slides with respect to the outer peripheral surface 210 when the rotation shaft 200 rotates.

In the present embodiment, the conductive lip 50 is not required to have sealability. Thus, as a material of the conductive lip 50, a material specialized in conductivity can be used, and examples of such a material include conductive rubber and conductive resin. A preferable example of the material of the conductive lip 50 is conductive polytetrafluoroethylene (PTFE).

Note that an outer peripheral edge of the conductive lip 50 is located radially inside the inner peripheral surface of the first cylindrical portion 71a. Thus, the outer peripheral edge of the conductive lip 50 does not reach the inner peripheral surface 310 (separates from the inner peripheral surface 310) (unlike the conductive lip of Patent Document 1 (the pre-seal of Patent Document 1)).

The sealing device 100 is configured as described above.

The first unit 110 and the second unit 120 of the sealing device 100 are each fixed to the housing 300.

The second unit 120 is fixed to the housing 300 by being inserted into the shaft hole 301 so that an outer peripheral surface of the abutting portion 70a, that is, the outer peripheral surface of the first metal ring 71 is pressed against and fixed to the inner peripheral surface 310.

The first unit 110 is fixed to the housing 300 by being inserted into the shaft hole 301 so that the contact surface 21a is pressed against and fixed to the inner peripheral surface 310.

As illustrated in Fig. 2, the second unit 120 is disposed on the inner side 330 side of the first unit 110. For example, the first unit 110 and the second unit 120 are disposed adjacent to each other in the axial direction of the central axis AX. That is, for example, the second unit 120 and the first unit 110 are disposed so that an end surface of the body abutting portion 21 on the inner side 330 side is in contact with the surface of the inner peripheral end 71c on the outer side 340 side.

Further, the rotation shaft 200 is inserted into the first unit 110 and the second unit 120. Thus, the first lip portion 23 and the conductive lip 50 are brought into pressure contact with the outer peripheral surface 210 of the rotation shaft 200 in a circumferential manner.

In this manner, an arrangement structure of the sealing device, which is configured by assembling the sealing device 100 in the housing 300, is obtained.

As illustrated in Fig. 2, the first lip portion 23 is inclined in a direction toward the outer side 340 of the housing 300 toward a distal end side of the first lip portion 23. The conductive lip 50 is inclined in a direction toward the inner side 330 of the housing 300 toward a distal end side of the conductive lip 50. That is, the inclination direction of the first lip portion 23 and the inclination direction of the conductive lip 50 are opposite to each other.

Here, operation of assembling the conductive lip 50 to the metal ring 70 to manufacture the second unit 120 can be performed, for example, as follows.

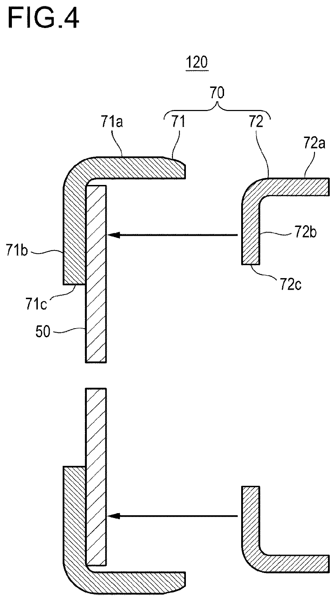

The conductive lip 50 before being assembled to the metal ring 70 has, for example, a flat donut shape as illustrated in Fig. 4.

The conductive lip 50 is inserted into the first metal ring 71 so as to be disposed along the first inward extending portion 71b. Next, the second metal ring 72 is press-fitted into the first metal ring 71 (the first metal ring 71 is externally fitted to the second metal ring 72), the first metal ring 71 and the second metal ring 72 are caulked and fixed to each other, and a portion (radially outer portion) of the conductive lip 50 is compressed and held by the first inward extending portion 71b and the second inward extending portion 72b.

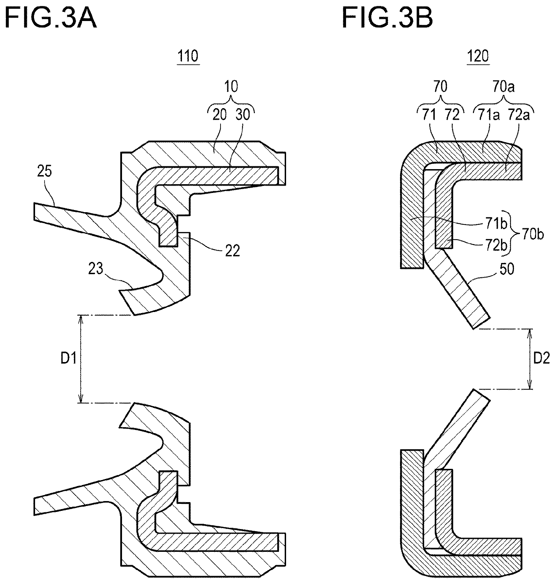

Here, as described above, the inner peripheral end of the second inward extending portion 72b (the inner peripheral end 72c of the second metal ring 72) is located radially outside the inner peripheral end of the first inward extending portion 71b (the inner peripheral end 71c of the first metal ring 71). Thus, when the portion (radially outer portion) of the conductive lip 50 is compressed by the first inward extending portion 71b and the second inward extending portion 72b to cause strain in the conductive lip 50, as illustrated in Fig. 3B, in the conductive lip 50, the portion extending radially inward more than the inward extending portion 70b is bent toward the second inward extending portion 72b side (the right side in Fig. 3B and Fig. 2). Note that the present invention is not limited to this example, and the conductive lip 50 may be already bent from a state before being sandwiched (compressed) by the first inward extending portion 71b and the second inward extending portion 72b.

Here, in a state before the rotation shaft 200 is inserted into the sealing device 100, as illustrated in Fig. 3B, the portion of the conductive lip 50 extending radially inward more than the inward extending portion 70b may extend linearly, and also in a state before the rotation shaft 200 is inserted into the sealing device 100, as illustrated in Fig. 2, the portion of the conductive lip 50 extending radially inward more than the inward extending portion 70b may extend in an arc shape.

Here, in a state before the rotation shaft 200 is inserted into the sealing device 100, an inner diameter D2 (Fig. 3B) of the conductive lip 50 is preferably smaller than an inner diameter D1 (Fig. 3A) of the first lip portion 23.

In this manner, it is possible to achieve a structure in which a contact area between the rotation shaft 200 and the conductive lip 50 is larger than a contact area between the rotation shaft 200 and the first lip portion 23 in a state after the rotation shaft 200 is inserted into the sealing device 100. That is, it is possible to achieve a structure in which a distance L2 is longer than a distance L1 illustrated in Fig. 2. This makes it possible to ensure conduction by the conductive lip 50 more reliably.

Note that the first lip portion 23 has higher rigidity than the conductive lip 50, and even if the contact area between the rotation shaft 200 and the first lip portion 23 is smaller than the contact area between the rotation shaft 200 and the conductive lip 50, the sealing performance by the first lip portion 23 can be sufficiently ensured.

### [Second Embodiment]

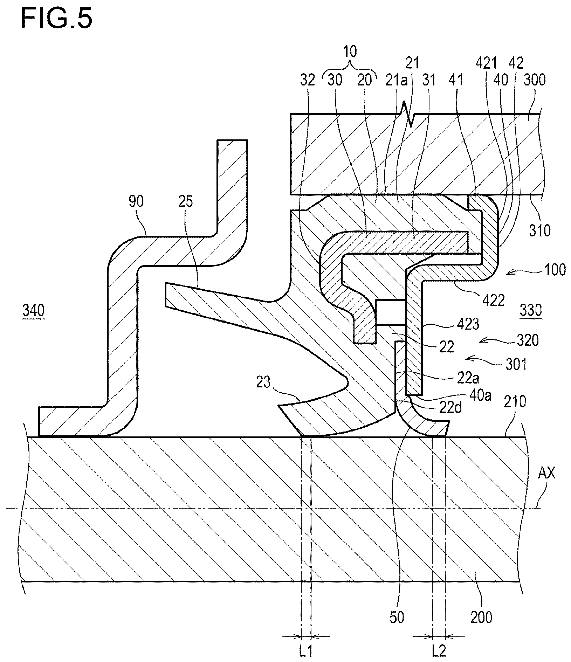

Next, a second embodiment will be described with reference to Fig. 5.

A sealing device 100 according to the present embodiment is different from the sealing device 100 according to the first embodiment in the following points, and is configured similarly to the sealing device 100 according to the first embodiment in the other points.

In the first embodiment described above, the sealing device 100 includes the first unit 110 and the second unit 120 that are separated from each other.

On the other hand, in the case of the present embodiment, the entire sealing device 100 is integrally configured.

In the present embodiment, the dimension of the body abutting portion 21 of the seal body constituent member 20 in the axial direction of the central axis AX is smaller than that in the first embodiment. The protrusion length of the body abutting portion 21 from the body inward extending portion 22 is smaller than that in the first embodiment.

In the present embodiment, the sealing device 100 includes a metal ring 40 instead of the metal ring 70.

The metal ring 40 has an abutting portion 41 abutting on the housing 300 and an inward extending portion 42 extending radially inward from the abutting portion 41 and holding the conductive lip 50.

The metal ring 40 is attached to the seal body 10, and the conductive lip 50 is integrated with the seal body 10 by being sandwiched between the inward extending portion 42 and the seal body 10.

Thus, the number of components and the installation space can be reduced as compared with the first embodiment, and good integrity between the conductive lip 50 and the seal body 10 can be achieved.

More specifically, the metal ring 40 is fixed to the seal body constituent member 20.

The abutting portion 41 is formed in, for example, a cylindrical shape concentric with the central axis AX. However, the abutting portion 41 has an extremely short dimension in the axial direction. The abutting portion 41 is caulked and fixed to an outer peripheral surface of a distal end portion (distal end portion on the inner side 330) of the body abutting portion 21.

The outer peripheral surface of the abutting portion 41 is circumferentially pressed against the inner peripheral surface 310 of the shaft hole 301.

The inward extending portion 42 of the metal ring 40 includes, for example, an outer flange portion 421, an intermediate cylindrical portion 422, and an inner flange portion 423.

The outer flange portion 421 extends radially inward in an inner flange shape from an end of the abutting portion 41 on the inner side 330. The outer flange portion 421 is disposed along a distal end surface (end surface on the inner side 330) of the main body abutting portion 21. The outer flange portion 421 is formed in a flat plate shape orthogonal to the central axis AX and a donut shape.

The intermediate cylindrical portion 422 is formed in a cylindrical shape coaxial with the central axis AX. The intermediate cylindrical portion 422 extends from the radially inner end of the outer flange portion 421 toward the outer side 340. The intermediate cylindrical portion 422 is disposed along an inner peripheral surface of a portion extending toward the inner side 330 from the body inward extending portion 22 in the body abutting portion 21.

The inner flange portion 423 extends radially inward in an inner flange shape from an end of the intermediate cylindrical portion 422 on the outer side 340 side. The inner flange portion 423 is formed in a flat plate shape orthogonal to the central axis AX and a donut shape. The inner flange portion 423 is disposed along a surface of the body inward extending portion 22 facing the inner side 330.

The metal ring 40 is formed in a three-dimensional shape corresponding to a movement locus of a cut end surface shape of the metal ring 40 illustrated in Fig. 5 when the cut end surface shape is rotated once around the central axis **AX.**

The inner flange portion 423 sandwiches a portion (radially outer portion) of the conductive lip 50 together with the body inward extending portion 22 of the seal body constituent member 20.

The material of the metal ring 40 is similar to the material of the metal ring 70 (the first metal ring 71 and the second metal ring 72).

The metal ring 40 can be formed by press working or forging.

In the present embodiment, the seal body constituent member 20 has a recess 22a in which the portion of the conductive lip 50 (radially outer portion) is disposed. Thus, during and after the assembly of the sealing device 100, the conductive lip 50 can be more stably positioned and fixed with respect to the seal body constituent member 20, and thus the seal body 10. That is, the sealing device 100 is excellent in ease of manufacturing and structural stability.

The recess 22a is formed on a surface of the body inward extending portion 22 on the inner side 330 (right side in Fig. 5).

The depth (dimension in a direction along the central axis AX) of the recess 22a is less than a thickness dimension of the conductive lip 50 before being assembled to the seal body 10, and the conductive lip 50 is sandwiched in a compressed state between the inner flange portion 423 and a bottom surface of the recess 22a.

An outer peripheral edge of the conductive lip 50 is positioned by an outer peripheral edge of the recess 22a.

Thus, the conductive lip 50 is fitted against the seal body constituent member 20.

Here, in a radial direction, the distance from an inner peripheral edge to an outer peripheral edge of the conductive lip 50, that is, {(outer diameter of conductive lip 50) - (inner diameter of conductive lip 50)}/2 is shorter than the distance from the outer peripheral surface 210 of the rotation shaft 200 to the inner peripheral surface 310 of the housing 300, that is, {(inner diameter of shaft hole 301) - (outer diameter of rotation shaft 200)}/2. Then, the outer peripheral edge of the conductive lip 50 is located radially inside the contact surface 21a of the seal body constituent member 20. More specifically, the outer peripheral edge of the conductive lip 50 is located radially inside an inner peripheral surface of the intermediate cylindrical portion 422. Thus, a structure in which the conductive lip 50 is fitted into the recess 22a can be easily achieved.

The assembling operation of the conductive lip 50 and the metal ring 40 with respect to the seal body 10 can be performed, for example, by aligning the conductive lip 50 with respect to the recess 22a and then fitting the metal ring 40 into the seal body 10.

Here, an inner peripheral end 40a of the inward extending portion 42 (inner peripheral end of the inner flange portion 423) is located radially outside an inner peripheral end of a portion of the seal body 10 that sandwiches the conductive lip 50 (inner peripheral end 22d of a portion of the body inward extending portion 22 that sandwiches the conductive lip 50).

Thus, by sandwiching the portion (radially outer portion) of the conductive lip 50 in a compressed state by the body inward extending portion 22 and the inner flange portion 423, a portion of the conductive lip 50 extending radially inward more than the inward extending portion 42 is bent toward the inner side 330 in the housing 300 by a mechanism similar to the mechanism described with reference to Figs. 4 and 3B in the first embodiment.

The sealing device 100 is fixed to the housing 300 by being inserted into the shaft hole 301 so that the outer peripheral surface of the abutting portion 41 and the contact surface 21a are pressed against and fixed to the inner peripheral surface 310. Further, the rotation shaft 200 is inserted into the inside of the sealing device 100. Thus, the first lip portion 23 and the conductive lip 50 are brought into pressure contact with the outer peripheral surface 210 of the rotation shaft 200 in a circumferential manner. Thus, an arrangement structure of the sealing device, which is configured by incorporating the sealing device 100 into the housing 300, is obtained.

Also in the present embodiment, in a state where the rotation shaft 200 is inserted into the sealing device 100, a distance L2 is longer than a distance L1 illustrated in Fig. 5, and the contact area between the rotation shaft 200 and the conductive lip 50 is larger than the contact area between the rotation shaft 200 and the first lip portion 23.

Further, in a state before the rotation shaft 200 is inserted into the sealing device 100 (not shown in the drawings), an inner diameter of the conductive lip 50 is smaller than an inner diameter of the first lip portion 23.

Although the embodiments and the modifications have been described above with reference to the drawings, these are examples of the present invention, and various configurations other than the above can be adopted.

In addition, the above-described embodiments and modifications can be arbitrarily combined without departing from the gist of the present invention.

The present embodiment includes the following technical ideas.
(1) A sealing device that is disposed in a gap between an outer peripheral surface of a rotation shaft and an inner peripheral surface of a shaft hole in a housing having the shaft hole into which the rotation shaft is inserted to seal the gap, the sealing device including:
   a first lip portion;
   a second lip portion disposed on an inner side of the first lip portion in the housing; and
   a metal ring holding the second lip portion, wherein
   the second lip portion is a conductive lip constituted by a conductive material, and
   the metal ring includes an abutting portion abutting on the housing, and an inward extending portion extending radially inward from the abutting portion and holding the conductive lip.
(2) The sealing device according to (1), wherein the first lip portion is inclined in a direction toward an outer side of the housing toward a distal end side of the first lip portion, and
   the conductive lip portion is inclined in a direction toward an inner side of the housing toward a distal end side of the conductive lip.
(3) The sealing device according to (1) or (2), wherein
   the metal ring includes a first metal ring and a second metal ring,
   the first metal ring includes:
      a first cylindrical portion; and
      a first inward extending portion extending radially inward from the first cylindrical portion,
      the second metal ring includes:
         a second cylindrical portion disposed along an inner peripheral surface of the first cylindrical portion; and
         a second inward extending portion extending radially inward from the second cylindrical portion and disposed along the first inward extending portion,
         the first cylindrical portion and the second cylindrical portion constitute the abutting portion,
         the first inward extending portion and the second inward extending portion constitute the inward extending portion, and
         the conductive lip is held by being sandwiched between the first inward extending portion and the second inward extending portion.
(4) The sealing device according to (3), wherein
   the second inward extending portion is disposed on an inner side of the first inward extending portion in the housing,
   an inner peripheral end of the second inward extending portion is located radially outside an inner peripheral end of the first inward extending portion, and
   a portion of the conductive lip extending radially inward more than the inward extending portion is bent toward the inner side in the housing.
(5) The sealing device according to any one of (1) to (4), further including a seal body, wherein
   the seal body includes:
   a core metal constituted by a metal material; and
   a seal body constituent member constituted by an elastic body and in which the core metal is integrated, and
   the seal body constituent member includes the first lip portion.
(6) The sealing device according to (5), wherein
   the metal ring is attached to the seal body, and
   the conductive lip is integrated with the seal body by being sandwiched between the inward extending portion and the seal body.
(7) The sealing device according to (6), wherein
   an inner peripheral end of the inward extending portion is positioned radially outward from an inner peripheral end of a portion sandwiching the conductive lip in the seal body, and
   a portion of the conductive lip extending radially inward more than the inward extending portion is bent toward the inner side in the housing.
(8) The sealing device according to any one of (1) to (7), wherein in a state before the rotation shaft is inserted into the sealing device, an inner diameter of the conductive lip is smaller than an inner diameter of the first lip portion.
(9) The sealing device according to any one of (1) to (8), wherein in a state after the rotation shaft is inserted into the sealing device, a contact area between the rotation shaft and the conductive lip is larger than a contact area between the rotation shaft and the first lip portion.
(10) The sealing device according to any one of (1) to (9), wherein the first lip portion is a dust lip.

This application claims priority based on Japanese Patent Application No. 2023-37277 filed on March 10, 2023, the entire disclosure of which is incorporated herein.

### REFERENCE SIGNS LIST

- 10: Seal body
- 20: Seal body constituent member
- 21: Body abutting portion
- 21a: Contact surface
- 22: Body inward extending portion
- 22a: Recess
- 22d: Inner peripheral end
- 23: First lip portion
- 25: Outward extending portion
- 30: Core metal
- 31: Cylindrical portion
- 31a: Contact surface
- 32: Core metal inward extending portion
- 32a: Contact surface
- 32b: Bent portion
- 40: Metal ring
- 40a: Inner peripheral end
- 41: Abutting portion
- 42: Inward extending portion
- 42a: Recess
- 42b: Bent portion
- 50: Conductive lip (second lip portion)
- 70: Metal ring
- 70a: Abutting portion
- 70b: Inward extending portion
- 71: First metal ring
- 71a: First cylindrical portion
- 71b: First inward extending portion
- 71c: Inner peripheral end
- 72: Second metal ring
- 72a: Second cylindrical portion
- 72b: Second inward extending portion
- 72c: Inner peripheral end
- 90: Slinger
- 100: Sealing device
- 110: First unit
- 120: Second unit
- 200: Rotation shaft
- 210: Outer peripheral surface
- 300: Housing
- 301: Shaft hole
- 310: Inner peripheral surface
- 320: Gap
- 330: Inner side
- 340: Outer side
- 421: Outer flange portion
- 422: Intermediate cylindrical portion
- 423: Inner flange portion
- 1000: Sealing device
- 1201: First rotation shaft
- 1202: Second rotation shaft
- 1203: Third rotation shaft
- 1220: Gear
- 1300: Housing
- 1400: Bearing
- 1500: Battery
- 1600: Inverter
- 1700: Electric motor
- 1800: Wheel
- 1900: Speed reducer

## Claims

1. A sealing device that is disposed in a gap between an outer peripheral surface of a rotation shaft and an inner peripheral surface of a shaft hole in a housing having the shaft hole into which the rotation shaft is inserted to seal the gap, the sealing device comprising:
a first lip portion;
a second lip portion disposed on an inner side of the first lip portion in the housing; and
a metal ring holding the second lip portion, wherein
the second lip portion is a conductive lip constituted by a conductive material, and
the metal ring includes an abutting portion abutting on the housing, and an inward extending portion extending radially inward from the abutting portion and holding the conductive lip.

2. The sealing device according to claim 1, wherein
the first lip portion is inclined in a direction toward an outer side of the housing toward a distal end side of the first lip portion, and
the conductive lip is inclined in a direction toward an inner side of the housing toward a distal end side of the conductive lip.

3. The sealing device according to claim 1 or 2, wherein
the metal ring includes a first metal ring and a second metal ring,
the first metal ring includes:
a first cylindrical portion; and
a first inward extending portion extending radially inward from the first cylindrical portion,
the second metal ring includes:
a second cylindrical portion disposed along an inner peripheral surface of the first cylindrical portion; and
a second inward extending portion extending radially inward from the second cylindrical portion and disposed along the first inward extending portion,
the first cylindrical portion and the second cylindrical portion constitute the abutting portion,
the first inward extending portion and the second inward extending portion constitute the inward extending portion, and
the conductive lip is held by being sandwiched between the first inward extending portion and the second inward extending portion.

4. The sealing device according to claim 3, wherein
the second inward extending portion is disposed on an inner side of the first inward extending portion in the housing,
an inner peripheral end of the second inward extending portion is located radially outside an inner peripheral end of the first inward extending portion, and
a portion of the conductive lip extending radially inward more than the inward extending portion is bent toward the inner side in the housing.

5. The sealing device according to any one of claims 1 to 4, further comprising a seal body, wherein
the seal body includes:
a core metal constituted by a metal material; and
a seal body constituent member constituted by an elastic body and in which the core metal is integrated, and
the seal body constituent member includes the first lip portion.

6. The sealing device according to claim 5, wherein
the metal ring is attached to the seal body, and
the conductive lip is integrated with the seal body by being sandwiched between the inward extending portion and the seal body.

7. The sealing device according to claim 6, wherein
an inner peripheral end of the inward extending portion is positioned radially outward from an inner peripheral end of a portion sandwiching the conductive lip in the seal body, and
a portion of the conductive lip extending radially inward more than the inward extending portion is bent toward the inner side in the housing.

8. The sealing device according to any one of claims 1 to 7, wherein in a state before the rotation shaft is inserted into the sealing device, an inner diameter of the conductive lip is smaller than an inner diameter of the first lip portion.

9. The sealing device according to any one of claims 1 to 8, wherein in a state after the rotation shaft is inserted into the sealing device, a contact area between the rotation shaft and the conductive lip is larger than a contact area between the rotation shaft and the first lip portion.

10. The sealing device according to any one of claims 1 to 9, wherein the first lip portion is a dust lip.
